# FASCICULE DE BREVET EUROPEEN

(11) **EP 0 883 585 B1**
(45) Date de publication et mention de la délivrance du brevet: **12.01.2000**
(21) Numéro de dépôt: 97905053.1
(22) Date de dépôt: 18.02.1997
(51) Int. Cl.: C04B 18/10, C04B 28/04, A62D 3/00

(54) **PROCEDE D'INERTAGE DE CENDRES**
VERFAHREN ZUM INERTIEREN VON ASCHE
ASH INERTING METHOD

(30) Priorité: 28.02.1996 BE 9600170; 11.09.1996 BE 9600763
(43) Date de publication de la demande: 16.12.1998
(73) Titulaire: SOLVAY (Société Anonyme), 1050 Bruxelles (BE)
(72) Inventeur: DERIE, René, B-1170 Bruxelles (BE)
(74) Mandataire: Anthoine, Paul
(86) Numéro de dépôt international: EP9700778
(87) Numéro de publication internationale: WO9731874

(56) Documents cités:
- EP-A- 0 572 813
- EP-A- 0 582 008
- WO-A-96/20049
- GB-A- 2 277 515
- US-A- 4 737 356
- US-A- 5 037 479

## Description

La présente invention concerne un procédé d'inertage de cendres, en particulier de cendres volantes de fumées d'incinérateurs urbains.

Les incinérateurs urbains (servant à la destruction de déchets ménagers et/ou de déchets hospitaliers) produisent des volumes parfois importants de cendres volantes. La composition minéralogique de ces cendres ne varie guère, quelle que soit leur origine, et on y retrouve généralement, quoique en proportions pouvant varier du simple au double, voire davantage, des chlorures de métaux alcalins (NaCl et KCl), de l'anhydrite, du quartz, des aluminosilicates vitrifiés, d'autres résidus oxydés relativement inertes chimiquement (dont SnO₂), des métaux lourds (notamment du zinc, du plomb, du cadmium, du mercure et du chrome), des dérivés organiques chlorés et des imbrûlés. Parmi les imbrûlés, on trouve fréquemment de l'aluminium métallique.

La présence de substances hydrosolubles, de métaux lourds et de matières organiques toxiques (dioxines, furanes) peut poser des difficultés pour la mise en décharge de ces cendres volantes et implique de les soumettre au prélable à un procédé d'inertage destiné à les rendre inoffensives pour le milieu.

Différents procédés ont été suggérés pour réaliser l'inertage de cendres d'incinérateurs urbains, ces procédés visant à stabiliser les métaux lourds, principalement le plomb et le cadmium. Selon un de ces procédés (brevet Etats-Unis US-A-4 737 356), on traite les cendres volantes avec un phosphate soluble dans l'eau et de la chaux, de manière à insolubiliser les ions des métaux lourds sous la forme de phosphates métalliques. Selon un procédé voisin (demande de brevet européen EP-A-568 903), les cendres sont traitées avec de l'eau et des ions phosphate de façon à amener le pH à 6,9 et insolubiliser les métaux lourds à l'état de phosphates métalliques, les ions phosphate en excès sont fixés par des ions aluminium ou fer trivalents et le milieu réactionnel est alcalinisé à l'aide de chaux vive CaO. Selon la demande de brevet européen EP-A-534 231, des cendres volantes recueillies d'un traitement d'épuration de fumées acides avec de la chaux sont simplement calcinées à haute température (entre 375 et 800 °C).

Avec les procédés connus qui viennent d'être décrits, les produits inertes formés sont des poudres, ce qui peut poser des difficultés pour leur manutention et leur stockage. Un moyen d'obvier à cette difficulté consiste à éliminer les cendres volantes dans des mortiers hydrauliques, avec lesquels on forme des blocs solides et inertes. A cet effet, dans un procédé connu d'inertage d'une boue contaminée par des métaux lourds, on mélange la boue avec du ciment Portland et des cendres volantes de manière à former un bloc solide, compact et inerte (ROY A. HEATON H.C., CARTLEDGE F.K. and TITTLEBAUM M.E. "Solidification/Stabilization of a Heavy Metal Sludge by a Portland Cement/Fly Ash Binding Mixture" - Hazardous Waste & Hazardous Materials, Vol. 8, No. 1, 1991, pages 33-41). L'application de ce procédé connu à l'inertage des cendres volantes des fumées générées par l'incinération de déchets urbains ne donne toutefois pas satisfaction. Les blocs obtenus dans ce cas sont en effet expansés par la présence de multiples inclusions gazeuses, ce qui accroît considérablement leur volume et leur encombrement et les rend friables et peu résistants à la compression.

L'invention vise à remédier aux inconvénients précités des procédés connus, en fournissant un procédé réalisant un inertage efficace de cendres comprenant des métaux lourds et de l'aluminium métallique imbrûlé, dans des blocs solides, compacts et présentant de bonnes propriétés mécaniques. Elle vise notamment à fournir un procédé qui permette d'évacuer les cendres volantes des fumées des incinérateurs urbains, dans des blocs compacts, non expansés, présentant une bonne résistance à la compression et respectant les tests normalisés de toxicité, notamment le test de toxicité TCLP ("Toxicity Characteristic Leaching Procedure", USA).

En conséquence, l'invention concerne un procédé d'inertage de cendres contenant des métaux lourds et de l'aluminium métallique, qui se caractérise en ce qu'on additionne aux cendres, un réactif sélectionné parmi l'acide phosphorique et les phosphates des métaux alcalins, on soumet le mélange phosphaté ainsi obtenu à un gâchage avec de l'eau et un liant hydraulique en sorte de former un mortier hydraulique et on soumet le mortier à une prise et un durcissement.

On entend désigner par métaux lourds, les métaux dont la masse spécifique est au moins égale à 5 g/cm³, ainsi que le béryllium, l'arsenic, le sélénium et l'antimoine, conformément à la définition généralement admise (Heavy Metals in Wastewater and Sludge Treatment Processes; Vol. I, CRC Press, Inc; 1987; page 2).

Dans le procédé selon l'invention, on met en oeuvre un réactif que l'on sélectionne parmi l'acide phosphorique et les phosphates des métaux alcalins (de préférence de sodium). L'acide orthophosphorique et l'hexamétaphosphate de sodium conviennent bien.

L'addition du réactif précité aux cendres doit être opérée en présence d'une quantité suffisante d'eau pour permettre de réaliser rapidement, par simple malaxage, un mélange réactionnel homogène. Bien que ne souhaitant pas être lié par une explication théorique, l'inventeur pense qu'une des difficultés rencontrées, avant l'invention, pour évacuer des cendres volantes d'incinérateurs urbains dans des mortiers hydrauliques était notamment imputable à la présence d'aluminium métallique dans ces cendres. Dans le procédé selon l'invention, le réactif susdit a pour fonction de convertir l'aluminium métallique en phosphate d'aluminium. La quantité de réactif qu'il est nécessaire de mettre en oeuvre va dès lors dépendre de la composition minéralogique des cendres, en particulier de leur teneur en aluminium métallique et en métaux lourds, et elle doit être déterminée dans chaque cas particulier par un travail de routine au laboratoire. En pratique, des quantités pondérales de 5 à 25 % (de préférence de 8 à 15 %) dudit réactif par rapport au poids des cendres conviennent bien.

L'eau et le liant hydraulique doivent être mis en oeuvre en quantités adéquates pour former avec le mélange phosphaté, un mortier hydraulique. Il est important d'opérer un malaxage efficace du mélange phosphaté avec l'eau et le liant hydraulique, de manière à réaliser un mortier hydraulique de composition homogène. A l'issue du malaxage, on soumet le mortier à une maturation pour provoquer sa prise et son durcissement. Avant de le soumettre à la prise et au durcissement, le mortier doit être façonné sous une forme adéquate, permettant une manutention et un stockage efficace, par exemple sous la forme de briquettes, de blocs prismatiques ou de boulettes sphériques. La prise et le durcissement peuvent être réalisés sous atmosphère humide ou sèche. On les réalise généralement en présence d'air atmosphérique.

Le liant hydraulique est avantageusement sélectionné parmi le ciment Portland et le clinker de ciment Portland. Bien que le ciment Portland procure de bons résultats, le clinker de ciment Portland est préféré.

La quantité de liant hydraulique à mettre en oeuvre va dépendre de divers paramètres, en particulier du liant hydraulique sélectionné, de la composition des cendres et des propriétés recherchées pour les produits recueillis du procédé d'inertage, notamment leur résistance mécanique et leur comportement aux tests de toxicité (par exemple le test TCLP défini plus haut). En pratique, on recommande de mettre en oeuvre une quantité pondérale de liant hydraulique supérieure à 10 % (de préférence au moins égale à 20 %) du poids des cendres. Il n'y a pas intérêt à ce que le poids du liant hydraulique mis en oeuvre excède 100 % (généralement 50 %) du poids des cendres. Les quantités pondérales de liant hydraulique situées entre 20 (de préférence 25) % et 50 (de préférence 40) % du poids des cendres sont spécialement recommandées.

A l'issue du traitement de prise et de durcissement, qui peut durer plusieurs jours, on recueille une masse solide et compacte, qui est sensiblement inerte vis-à-vis des agents atmosphériques et respecte les normes de toxicité, notamment celles définies par le test TCLP défini plus haut. La forme de cette masse solide est celle sous laquelle le mortier a été façonné et elle peut par exemple comprendre des briquettes ou des blocs sphériques ou prismatiques. Elle est compacte, sensiblement exempte d'inclusions gazeuses et présente de ce fait de bonnes propriétés mécaniques, notamment une dureté et une résistance aux chocs et à l'abrasion suffisantes pour permettre sa manutention et son stockage sans difficulté.

Dans une forme de réalisation avantageuse du procédé selon l'invention, la prise et le durcissement du mortier sont réalisés sous une atmosphère humide, de préférence saturée de vapeur d'eau. Cette forme de réalisation du procédé selon l'invention s'est révélée spécialement avantageuse dans le cas de cendres contenant du chrome de valence 6. On a en effet observé que, toutes autres choses égales, elle améliore sensiblement l'inertage du chrome dans la masse solide recueillie à l'issue du procédé.

Dans une autre forme d'exécution avantageuse du procédé selon l'invention, on incorpore à l'eau du gâchage, un additif sélectionné parmi le fer, le manganèse, les composés du fer (II), les composés du manganèse (II) et les sels réducteurs des métaux alcalins (de préférence du sodium), en une quantité pondérale de 0,3 à 1 % du poids du mortier. Dans cette forme de réalisation de l'invention, l'additif est avantageusement sélectionné parmi le sulfate ferreux, le sulfate manganeux, le nitrite de sodium, le sulfite de sodium et le fer métallique.

Pour l'application du procédé selon l'invention, l'origine des cendres n'est pas critique. L'invention est toutefois spécialement adaptée aux cendres volantes recueillies des fumées des incinérateurs urbains, tels que les incinérateurs de déchets ménagers et les incinérateurs de déchets hospitaliers.

Les cendres volantes des fumées générées par les incinérateurs urbains comprennent habituellement, en plus de métaux lourds et d'aluminium métallique, des matières organiques indésirables (en particulier des matières organiques chlorées telles que des dioxines et des furanes), des composés hydrosolubles, par exemple des chlorures de métaux alcalins, ainsi que des imbrûlés.

Dans une forme d'exécution particulière du procédé selon l'invention, dans le cas où les cendres contiennent des composés hydrosolubles, on les soumet à un lavage avec de l'eau alcaline, avant d'y additionner le réactif précité, sélectionné parmi l'acide phosphorique et les phosphates des métaux alcalins. Dans cette forme d'exécution du procédé selon l'invention, le lavage des cendres à l'eau a pour objectif d'en éliminer les composés hydrosolubles, en particulier les sels de sodium et de potassium (principalement le chlorure de sodium, le chlorure de potassium et le sulfate de sodium) et une partie de l'anhydrite. Pour le lavage des cendres, il est nécessaire d'utiliser une eau alcaline, de manière à insolubiliser les métaux lourds. En pratique, le lavage des cendres (notamment le pH de l'eau utilisée et le temps de contact entre l'eau et les cendres) doit être réglé de manière que le milieu aqueux recueilli du lavage soit alcalin et présente de préférence une valeur du pH supérieure à 8, les valeurs au moins égales à 9,5 étant recommandées. On évite de la sorte un solubilisation des métaux lourds qui restent dès lors dans la phase solide résiduelle recueillie du lavage. Au besoin, il peut s'avérer nécessaire d'ajouter un réactif à l'eau de lavage pour amener le pH à la valeur recherchée, par exemple de la chaux. A l'issue du lavage, on recueille une suspension aqueuse que l'on soumet à une filtration ou à une séparation mécanique équivalente (par exemple une sédimentation ou une centrifugation) pour en séparer les matières solides, non dissoutes, auxquelles on ajoute alors le réactif précité, conformément au procédé selon l'invention.

Dans une autre forme d'exécution du procédé selon l'invention, dans le cas où les cendres contiennent des matières organiques et/ou des imbrûlés, on soumet le mélange phosphaté précité à une calcination avant d'y ajouter l'eau et le liant hydraulique. Dans cette forme d'exécution du procédé selon l'invention, la calcination est réalisée en atmosphère oxydante (généralement à l'air ambiant). Elle a pour objectif la destruction des imbrûlés et l'élimination des matières organiques. La calcination est généralement réalisée à une température supérieure à 600 °C, de préférence au moins égale à 700 °C. Il convient d'éviter une température excessive, qui aurait pour résultat de vaporiser une partie des métaux lourds. En pratique, la température de la calcination est de préférence inférieure à 1000 °C et, de manière avantageuse, elle ne dépasse pas 800 °C. Les températures de 600 à 800 °C sont spécialement recommandées.

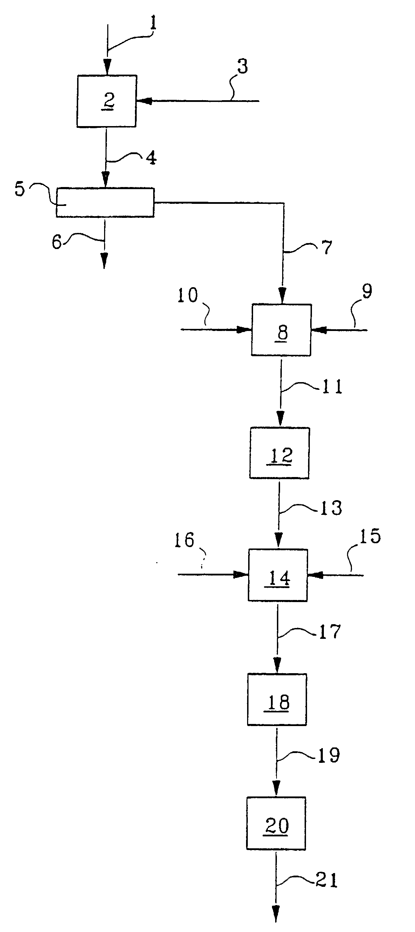

L'invention est illustrée par la description suivante de la figure unique du dessin annexé, qui représente le schéma d'une installation mettant en oeuvre une forme de réalisation particulière du procédé selon l'invention.

L'installation schématisée à la figure est destinée au traitement d'inertage de cendres 1, comprenant des métaux lourds, de l'aluminium métallique, des composés hydrosolubles, des matières organiques et des imbrûlés. Elle comprend une chambre de lavage 2 dans laquelle on introduit les cendres 1 et de l'eau 3. La quantité d'eau 3 introduite dans la chambre 2 est réglée pour dissoudre la totalité des composés hydrosolubles des cendres 1, en particulier le chlorure de sodium, le chlorure de potassium et le sulfate de sodium. On réalise par ailleurs, dans la chambre 2 une valeur de pH supérieure à 8, par exemple de 9,5 à 14, de manière à insolubiliser les métaux lourds. Au besoin, pour réaliser la valeur de pH souhaitée, on ajoute de l'acide chlorhydrique ou de l'hydroxyde de sodium à l'eau de lavage 3.

On recueille de la chambre de lavage 2, une suspension aqueuse 4, que l'on traite immédiatement sur un filtre 5. On écarte le filtrat 6 et on recueille le gâteau de filtration 7, que l'on envoie dans une chambre de réaction 8. Dans la chambre de réaction 8, le gâteau de filtration 7 est additionné d'une quantité suffisante d'acide phosphorique 9 et d'eau 10 pour former, par malaxage, une masse pompable 11 dans laquelle la totalité de l'aluminium métallique des cendres se trouve à l'état d'orthophosphate d'aluminium (en variante, une partie ou la totalité de l'acide phosphorique est remplacée par un phosphate de métal alcalin, de préférence de l'hexamétaphosphate de sodium). On soutire la masse pompable de la chambre de réaction 2 et on l'introduit dans un four de calcination 12, où on la chauffe à une température de 700 à 800 °C, pendant un temps suffisant pour décomposer les matières organiques et détruire les imbrûlés. La matière calcinée 13, extraite du four 12 est transférée dans une chambre de malaxage 14, où on lui additionne de l'eau 15 et un liant hydraulique 16 (par exemple du clinker de ciment Portland) en quantités réglées pour former, par malaxage avec la matière calcinée 13, un mortier hydraulique. Le mortier hydraulique 17 recueilli de la chambre de malaxage 14 est traité dans un tambour tournant 18, pour le façonner à l'état de petites boulettes 19 que l'on stocke pendant plusieurs jours dans une enceinte 20, hermétiquement close et remplie d'air sensiblement saturé de vapeur d'eau, à la température ambiante d'environ 20 °C et à la pression atmosphérique. La durée du traitement de maturation dans l'enceinte 20 est réglée pour réaliser la prise et le durcissement complet des boulettes de mortier 19. A l'issue du traitement de maturation dans l'enceinte 20, on recueille de celle-ci des boulettes 21 dures, compactes et inertes vis-à-vis de l'environnement et des agents atmosphériques, de sorte qu'elles puissent être évacuées dans une décharge de produits résiduaires.

Les exemples dont la description suit vont faire apparaître l'intérêt de l'invention.

### Première série d'essais

Dans les exemples 1 à 5 dont la description suit, on a traité des cendres prélevées d'un incinérateur d'ordures ménagères. La composition pondérale des cendres est consignée au tableau 1 suivant.

**Tableau 1**

| Constituants | Teneur pondérale |
|---|---|
| SiO₂ | 30,6 % |
| Al (total) (exprimé en Al₂O₃) | 16,7 % |
| Al métal. | 1-10 % de Al total |
| CaO | 22,0 % |
| MgO | 2,5 % |
| Na | 3,7 % |
| K | 2,6 % |
| TiO₂ | 2,4 % |
| FeO | 3,0 % |
| Zn | 1,00 % |
| Pb | 0,38 % |
| Cu | 0,10% |
| Cd | 0,008 % |
| Mn | 0,09 % |
| Cr (total) | 0,07 % |
| Cr (VI) | 13 ppm |
| Cl | 2,2 % |
| SO₃ | 9,6 % |
| P₂O₅ | 1,2 % |
| As | 65 ppm |
| Sb | 345 ppm |
| Hg | 1,1 ppm |
| Imbrûlés | 0,4 % |

### Exemple 1 (non conforme à l'invention)

On a lavé 108 g de cendres avec 1000 ml d'eau. Après une heure, le pH du milieu réactionnel s'est établi à 10,9. On a filtré la suspension aqueuse ainsi formée et on a recueilli le gâteau de filtration, après l'avoir au préalable lavé avec 100 ml d'eau.

Le gâteau de filtration a été additionné d'une quantité suffisante d'eau pour former une pâte malléable contenant approximativement 40% d'eau. A la pâte ainsi obtenue, on a ajouté 11,8 g d'une solution aqueuse d'acide phosphorique (concentration : 85% en poids), en maintenant la pâte sous agitation permanente. L'addition de l'acide phosphorique s'est accompagnée d'un dégagement de chaleur modéré. La masse pâteuse homogène ainsi obtenue a été placée dans une capsule en porcelaine réfractaire, que l'on a introduite dans un four froid. On a ensuite chauffé le four pour porter progressivement sa température à 800 °C, en une heure environ. Cette température de 800 °C a été maintenue pendant une heure, puis on a retiré la matière du four et on l'a laissée refroidir jusqu'à la température ambiante.

La poudre calcinée, recueillie du four a été soumise telle quelle à un test de toxicité selon la norme TCLP définie plus haut. A cet effet, à 100 g de la poudre calcinée, on a ajouté 2 l d'une solution aqueuse contenant 6 g d'acide acétique et 2,57 g d'hydroxyde de sodium par litre. Le mélange a été homogénéisé, puis filtré sur un filtre de fibres de verre de 0,6 à 0,8 µm et on a mesuré la teneur du filtrat en les métaux lourds de la poudre soumise au test.

Les résultats sont consignés au tableau 2 ci-dessous

**Tableau 2**

| Métaux lourds | Teneur (µg/l) |
|---|---|
| Cu | 1000 |
| Pb | 2900 |
| Zn | 15000 |
| Cd | 300 |
| As | 500 |
| Sb | 700 |
| Cr (VI) | 5100 |
| Hg | 10 |

### Exemple 2 (conforme à l'invention)

Un lot de la cendre définie au tableau 1 a été traité comme à l'exemple 1 et la poudre calcinée, recueillie du four et refroidie jusqu'à la température ambiante a été mélangée intimement à du clinker de ciment Portland (à raison de 1 part pondérale de clinker pour 5 parts pondérales de la poudre calcinée). Au mélange obtenu, on a ajouté de l'eau de gâchage à raison de 30 ml d'eau pour 100 g dudit mélange, en malaxant pour former un mortier homogène. Celui-ci a ensuite été façonné en boulettes que l'on a stockées à l'air pendant 5 jours, pour provoquer la prise et le durcissement du mortier. Les boulettes recueillies à l'issue de la prise et du durcissement du mortier ont été soumises au test de toxicité TCLP comme à l'exemple 1. A cet effet, on a broyé les boulettes au-dessous de 1 mm de diamètre (diamètre défini par tamisage) et, à 100 g de la matière broyée ainsi obtenue, on a ajouté 2 l d'une solution aqueuse contenant 6 g d'acide acétique et 2,57 g d'hydroxyde de sodium par litre. Le mélange a été homogénéisé, puis filtré sur un filtre de fibres de verre de 0,6 à 0,8 µm et on a mesuré la teneur du filtrat en les métaux lourds de la poudre soumise au test. Les résultats sont consignés au tableau 3 ci-dessous.

**Tableau 3**

| Métaux lourds | Teneur (µg/l) |
|---|---|
| Cu | 61 |
| Pb | <20 |
| Zn | 24 |
| Cd | 18 |
| As | <30 |
| Sb | <30 |
| Cr (VI) | 860 |

Une comparaison des résultats figurant aux tableaux 2 et 3 fait immédiatement apparaître le progrès apporté par l'invention, pour ce qui concerne l'inertage des métaux lourds de la cendre.

### Exemple 3 (conforme à l'invention)

Dans cet exemple, on a opéré comme à l'exemple 2, mais les boulettes recueillies à l'issue de la prise et du durcissement du mortier ont été soumises à un test de toxicité différent du test TCLP. Dans ce test, on a broyé les boulettes au-dessous de 1 mm (diamètre défini par tamisage) et on a soumis la matière broyée à une triple lixiviation avec de l'eau déminéralisée, dans un rapport liquide/solide égal à 10.

A l'issue de chaque lixiviation, on a mesuré la teneur du liquide de lavage en les métaux lourds de la poudre soumise au test. Les résultats sont consignés au tableau 4 ci-dessous.

**Tableau 4**

| Métaux lourds | Teneur (µg/l) |
|---|---|
| Première lixiviation | |
| Cu | 63 |
| Pb | <20 |
| Zn | <10 |
| Cd | 60 |
| As | <30 |
| Sb | <30 |
| Cr (VI) | 700 |

| Deuxième lixiviation | |
|---|---|
| Cu | 24 |
| Pb | <20 |
| Zn | <10 |
| Cd | 27 |
| As | <30 |
| Sb | <30 |
| Cr (VI) | 280 |

| Troisième lixiviation | |
|---|---|
| Cu | <10 |
| Pb | <20 |
| Zn | <10 |
| Cd | <10 |
| As | <30 |
| Sb | <30 |
| Cr (VI) | 35 |

### Exemple 4 (conforme à l'invention)

On a répété l'essai de l'exemple 2, dans les mêmes conditions, à la seule exception que le clinker de ciment Portland a été remplacé par du ciment Portland.

Les résultats du test TCLP sont reproduits au tableau 5.

**Tableau 5**

| Métaux lourds | Teneur (µg/l) |
|---|---|
| Cu | <10 |
| Pb | <20 |
| Zn | <10 |
| Cd | <10 |
| As | <30 |
| Sb | <30 |
| Cr (VI) | 840 |

### Exemple 5 (conforme à l'invention)

On a répété les conditions de l'essai de l'exemple 3, à la seule exception que le clinker de ciment Portland a été remplacé par du ciment Portland. Les résultats du test de triple lixiviation sont reproduits au tableau 6.

**Tableau 6**

| Métaux lourds | Teneur (µg/l) |
|---|---|
| Première lixiviation | |
| Cu | <10 |
| Pb | <20 |
| Zn | <10 |
| Cd | <10 |
| As | <30 |
| Sb | <30 |
| Cr (VI) | 1030 |

| Deuxième lixiviation | |
|---|---|
| Cu | <10 |
| Pb | <20 |
| Zn | <10 |
| Cd | <10 |
| As | <30 |
| Sb | <30 |
| Cr (VI) | 160 |

| Troisième lixiviation | |
|---|---|
| Cu | <10 |
| Pb | <20 |
| Zn | <10 |
| Cd | <10 |
| As | <30 |
| Sb | <30 |
| Cr (VI) | 90 |

### Seconde série d'essais

Dans les exemples 6 à 17 dont la description suit, on a traité des cendres présentant la composition pondérale du tableau 7.

**Tableau 7**

| Constituants | Teneur pondérale |
|---|---|
| SiO₂ | 19,3 % |
| Al (total) (exprimé en Al₂O₃) | 13,6 % |
| Al métal. | 1-10 % de Al total |
| CaO | 20,0 % |
| MgO | 2,8 % |
| Na | 7,5 % |
| K | 6,1 % |
| TiO₂ | 1,5 % |
| FeO | 2,2 % |
| Zn | 1,82 % |
| Pb | 1,20 % |
| Cu | 0,11 % |
| Cd | 0,094 % |
| Mn | 0,11 % |
| Cr (total) | 0,04 % |
| Cr (VI) | 0,33 ppm |
| Cl | 13,2 % |
| SO₃ | 6,2 % |
| P₂O₅ | 0,8 % |
| As | 125 ppm |
| Sb | 510 ppm |
| Hg | 12 ppm |
| Imbrûlés | 2,4 % |

### Exemple 6 (non conforme à l'invention)

On a lavé 136 g de cendres avec 1300 ml d'eau. Après une heure, le pH du milieu réactionnel s'est établi à 11,0. On a filtré la suspension aqueuse ainsi formée et on a recueilli le gâteau de filtration, après l'avoir au préalable lavé avec 100 ml d'eau.

On a ensuite opéré comme à l'exemple 1. Les résultats du test de toxicité (test TCLP) sont consignés au tableau 8 ci-dessous.

**Tableau 8**

| Métaux lourds | Teneur (µg/l) |
|---|---|
| Cu | 1200 |
| Pb | 1900 |
| Zn | 25000 |
| Cd | 500 |
| As | 1100 |
| Sb | 300 |
| Cr (VI) | 2300 |
| Hg | 20 |

### Exemple 7 (conforme à l'invention)

Un lot de la cendre définie au tableau 7 a été traité comme à l'exemple 6 et la poudre calcinée recueillie du four de calcination et refroidie jusqu'à la température ambiante a été mélangée à du clinker de ciment Portlant, à raison de 1 part pondérale de clinker pour 4 parts pondérales de cendre calcinée. Au mélange homogène obtenu, on a ajouté de l'eau de gachâge en une quantité égale à 30 ml pour 100 g de mélange, et on a malaxé pour former un mortier. Le mortier hydraulique obtenu a été façonné en boulettes que l'on a stockées à l'air pendant 5 jours, pour provoquer la prise et le durcissement du mortier.

Les boulettes recueillies à l'issue de la prise et du durcissement du mortier ont été soumises au test de toxicité TCLP. A cet effet, on a broyé les boulettes au-dessous de 1 mm de diamètre (diamètre défini par tamisage) et, à 100 g de la matière broyée ainsi obtenue, on a ajouté 2 l d'une solution aqueuses 0,1 M d'acide acétique. Le mélange a été homogénéisé, puis filtré sur un filtre de fibres de verre de 0,6 à 0,8 µm et on a mesuré la teneur du filtrat en les métaux lourds de la poudre soumise au test. Les résultats sont consignés au tableau 9 ci-dessous.

**Tableau 9**

| Métaux lourds | Teneur (µg/l) |
|---|---|
| Cu | 80 |
| Pb | <200 |
| Zn | 660 |
| Cd | 230 |
| As | 50 |
| Sb | 90 |
| Cr (VI) | 720 |
| Hg | <5 |

### Exemple 8 (conforme à l'invention)

On a répété l'essai de l'exemple 7, à la seule différence que le test de toxicité TCLP a été remplacé par le test de triple lixiviation décrit à l'exemple 3. Les résultats du test sont consignés au tableau 10 ci-dessous.

**Tableau 10**

| Métaux lourds | Teneur (µg/l) |
|---|---|
| Première lixiviation | |
| Cu | 38 |
| Pb | <20 |
| Zn | <10 |
| Cd | 17 |
| As | <30 |
| Sb | <30 |
| Cr (VI) | 145 |

| Deuxième lixiviation | |
|---|---|
| Cu | 37 |
| Pb | <20 |
| Zn | <10 |
| Cd | 80 |
| As | <30 |
| Sb | <30 |
| Cr (VI) | 95 |

| Troisième lixiviation | |
|---|---|
| Cu | <10 |
| Pb | <20 |
| Zn | <10 |
| Cd | <10 |
| As | <30 |
| Sb | <30 |
| Cr (VI) | 55 |

### Exemple 9 (conforme à l'invention)

On a répété l'essai de l'exemple 7, à la seule exception que le stockage des boulettes, à l'issue du gâchage, a été réalisé dans une enceinte hermétiquement close, remplie d'air saturé de vapeur d'eau (100 % d'humidité relative) pendant 8 jours. Les boulettes recueillies de l'enceinte ont été séchées à l'air pendant deux jours, puis soumises au test TCLP de l'exemple 8. Au test TCLP, on a relevé dans le filtrat une teneur en chrome hexavalent égale à 42 µg/l.

### Exemples 10, 11, 12 (conformes à l'invention)

Ces exemples concernent trois essais qui ont été effectués dans les mêmes conditions qu'à l'exemple 9, à la seule exception qu'un additif a été ajouté à l'eau de gâchage. Dans l'essai de l'exemple 10, cet additif a consisté en du sulfate ferreux heptahydraté (utilisé en une quantité pondérale égale à 1 % du poids du mortier); dans l'essai de l'exemple 11, il a consisté en du sulfate manganeux monohydraté (utilisé en une quantité pondérale égale à 0,7 % du poids du mortier); dans l'essai de l'exemple 12, il a consisté en une poudre de fer (utilisée en une quantité pondérale égale à 0,3 % du poids du mortier).

Au test TCLP, la teneur du filtrat en chrome hexavalent s'est révélée, dans chacun des trois exemples, inférieure à 10 µg/l.

### Exemples 13, 14, 15, 16 17 (conformément à l'invention)

On a répété l'essai de l'exemple 9 avec une quantité de cendres suffisante pour pouvoir confectionner, au départ du mortier, cinq éprouvettes prismatiques de 4 x 4 x16 cm. On a maintenu les éprouvettes pendant 28 jours dans une atmosphère saturée de vapeur d'eau, à la température ambiante pour provoquer la prise et le durcissement du mortier. Les cinq essais ont différé l'un de l'autre par les rapports pondéraux entre la quantité de cendre et la quantité de clinker utilisées.

Après la prise et le durcissement du mortier, on a soumis les éprouvettes à un test de résistance mécanique, qui a consisté à mesurer leur résistance à la flexion et leur résistance à la compression dans les conditions de la norme belge NBN 196-1 (1991). Les résultats des tests sont mentionnés au tableau 11 ci-dessous.

**Tableau 11**

| Exemple N° | cendre : clinker (Rapport pondéral) | Résistance mécanique | |
|---|---|---|---|
| | | Flexion (N/mm²) | Compression (N/mm²) |
| 13 | 2,5 | 2,94 | 5,7 |
| 14 | 3,0 | 2,94 | 4,9 |
| 15 | 3,5 | 2,94 | 5,7 |
| 16 | 4,0 | 3,19 | 5,0 |
| 17 | 5,0 | 2,45 | 4,1 |

## Revendications

1. Procédé d'inertage de cendres contenant des métaux lourds et de l'aluminium métallique, caractérisé en ce qu'on additionne aux cendres, un réactif sélectionné parmi l'acide phosphorique et les phosphates des métaux alcalins, on soumet le mélange phosphaté ainsi obtenu à un gâchage avec de l'eau et un liant hydraulique en sorte de former un mortier hydraulique et on soumet le mortier à une prise et un durcissement.

2. Procédé selon la revendication 1, caractérisé en ce que le réactif comprend de l'hexamétaphosphate de sodium.

3. Procédé selon la revendication 1 ou 2, caractérisé en ce que le liant hydraulique est sélectionné parmi le ciment Portland et le clinker de ciment Portland.

4. Procédé selon l'une quelconque des revendications 1 à 3, caractérisé en ce que le réactif précité est mis en oeuvre en une quantité pondérale de 8 à 15 % du poids des cendres.

5. Procédé selon l'une quelconque des revendications 1 à 4, caractérisé en ce que le liant hydraulique est mis en oeuvre en une quantité pondérale de 25 à 40 % du poids des cendres.

6. Procédé selon l'une quelconque des revendications 1 à 5, caractérisé en ce qu'on exécute la prise et le durcissement sous une atmosphère saturée de vapeur d'eau.

7. Procédé selon l'une quelconque des revendications 1 à 6, caractérisé en ce que l'on incorpore à l'eau de gâchage, un additif sélectionné parmi le fer, le manganèse, les composés du fer (II), les composés du manganèse (II) et les sels réducteurs des métaux alcalins, en une quantité pondérale de 0,3 à 1 % du poids du mortier.

8. Procédé selon la revendication 7, caractérisé en ce que l'additif est sélectionné parmi le sulfate ferreux, le sulfate manganeux, le nitrite de sodium, le sulfite de sodium et le fer métallique.

9. Procédé selon l'une quelconque des revendications 1 à 8, caractérisé en ce que, dans le cas où les cendres contiennent des composés hydrosolubles, on les soumet à un lavage avec de l'eau alcaline, avant d'y additionner l'acide phosphorique.

10. Procédé selon l'une quelconque des revendication 1 à 9, caractérisé en ce que, dans le cas où les cendres contiennent des matières organiques et/ou des imbrûlés, on soumet le mélange phosphaté précité à une calcination avant d'y ajouter l'eau et le liant hydraulique.

11. Procédé selon l'une quelconque des revendications 1 à 10, caractérisé en ce que les cendres comprennent des cendres volantes d'une fumée provenant de l'incinération de déchets urbains.

## Patentansprüche

1. Verfahren zum Inertisieren von Asche, die Schwermetalle und metallisches Aluminium enthält, dadurch gekennzeichnet, daß man der Asche ein Reagens, das unter Phosphorsäure und den Phosphaten der Alkalimetalle ausgewählt ist, zugibt, man das so erhaltene phosphathaltige Gemisch einem Anrühren mit Wasser und einem hydraulischen Bindemittel unterzieht, so daß sich ein hydraulischer Mörtel bildet, und man den Mörtel einem Abbinden und einem Härten unterzieht.

2. Verfahren gemäß Anspruch 1, dadurch gekennzeichnet, daß das Reagens Natriumhexametaphosphat umfaßt.

3. Verfahren gemäß Anspruch 1 oder 2, dadurch gekennzeichnet, daß das hydraulische Bindemittel unter Portlandzement und Portlandzementklinker ausgewählt ist.

4. Verfahren gemäß einem der Ansprüche 1 bis 3, dadurch gekennzeichnet, daß das obengenannte Reagens in einer Gewichtsmenge von 8 bis 15% des Gewichts der Asche verwendet wird.

5. Verfahren gemäß einem der Ansprüche 1 bis 4, dadurch gekennzeichnet, daß das hydraulische Bindemittel in einer Gewichtsmenge von 25 bis 40% des Gewichts der Asche verwendet wird.

6. Verfahren gemäß einem der Ansprüche 1 bis 5, dadurch gekennzeichnet, daß man das Abbinden und Härten unter einer mit Wasserdampf gesättigten Atmosphäre durchführt.

7. Verfahren gemäß einem der Ansprüche 1 bis 6, dadurch gekennzeichnet, daß man dem Anmachwasser einen Zusatzstoff, der unter Eisen, Mangan, den Eisen(ll)verbindungen, den Mangan(ll)verbindungen und den reduzierenden Salzen der Alkalimetalle ausgewählt ist, in einer Gewichtsmenge von 0,3 bis 1% des Gewichts des Mörtels zusetzt.

8. Verfahren gemäß Anspruch 7, dadurch gekennzeichnet, daß der Zusatzstoff unter Eisensulfat, Mangansulfat, Natriumnitrit, Natriumsulfit und metallischem Eisen ausgewählt ist.

9. Verfahren gemäß einem der Ansprüche 1 bis 8, dadurch gekennzeichnet, daß man in dem Fall, wo die Asche wasserlösliche Verbindungen enthält, sie einem Waschen mit alkalischem Wasser unterzieht, bevor man dazu die Phosphorsäure zugibt.

10. Verfahren gemäß einem der Ansprüche 1 bis 9, dadurch gekennzeichnet, daß man in dem Fall, wo die Asche organische Materialien und/oder Unverbranntes enthält, das obengenannte phosphathaltige Gemisch einem Glühen unterzieht, bevor man dazu das Wasser und das hydraulische Bindemittel zugibt.

11. Verfahren gemäß einem der Ansprüche 1 bis 10, dadurch gekennzeichnet, daß die Asche Flugasche eines Rauchgases aus der Verbrennung von Siedlungsabfällen enthält.

## Claims

1. Process for rendering ash containing heavy metals and aluminium metal inert, characterized in that a reactant selected from phosphoric acid and alkali metal phosphates is added to the ash, the phosphate-containing mixture thus obtained is subjected to puddling with water and a hydraulic binder so as to form a hydraulic mortar, and the mortar is subjected to setting and hardening.

2. Process according to Claim 1, characterized in that the reactant comprises sodium hexametaphosphate.

3. Process according to Claim 1 or 2, characterized in that the hydraulic binder is selected from Portland cement and Portland cement clinker.

4. Process according to any one of Claims 1 to 3, characterized in that the abovementioned reactant is used in an amount by weight of from 8 to 15% of the weight of the ash.

5. Process according to any one of Claims 1 to 4, characterized in that the hydraulic binder is used in an amount by weight of from 25 to 40% of the weight of the ash.

6. Process according to any one of Claims 1 to 5, characterized in that the setting and hardening are carried out under an atmosphere saturated with water vapour.

7. Process according to any one of Claims 1 to 6, characterized in that an additive selected from iron, manganese, iron(II) compounds, manganese(II) compounds and reductive salts of alkali metals is incorporated into the puddling water in an amount by weight of from 0.3 to 1% of the weight of the mortar.

8. Process according to Claim 7, characterized in that the additive is selected from ferrous sulphate, manganous sulphate, sodium nitrite, sodium sulphite and iron metal.

9. Process according to any one of Claims 1 to 8, characterized in that, in the case where the ash contains water-soluble compounds, it is subjected to washing with alkaline water before addition of the phosphoric acid thereto.

10. Process according to any one of Claims 1 to 9, characterized in that, in the case where the ash contains organic and/or noncombusted material, the abovementioned phosphate-containing mixture is subjected to calcination before the water and the hydraulic binder are added thereto.

11. Process according to any one of Claims 1 to 10, characterized in that the ash comprises fly ash from smoke originating from the incineration of urban waste.
